# EUROPÄISCHE PATENTSCHRIFT

(11) **EP 1 826 459 B1**
(45) Veröffentlichungstag und Bekanntmachung des Hinweises auf die Patenterteilung: **01.04.2009**
(21) Anmeldenummer: 07007843.1
(22) Anmeldetag: 09.02.2006
(51) Int. Cl.: F16H 45/02

(54) **Drehmomentwandler mit Überbrückungskupplung**
Torque converter with lock-up clutch
Convertisseur de couple avec embrayage de pontage

(30) Priorität: 28.02.2005 DE 102005008961
(43) Veröffentlichungstag der Anmeldung: 29.08.2007
(62) Teilanmeldung aus: 06002622.6
(73) Patentinhaber: ZF Friedrichshafen AG, 88046 Friedrichshafen (DE)
(72) Erfinder: Schröder, Arthur, 97456 Hambach (DE)

(56) Entgegenhaltungen:
- DE-A1- 10 330 031
- DE-A1- 19 515 302
- GB-A- 991 436
- US-A- 5 680 758

## Beschreibung

Die Erfindung betrifft eine Kopplungsvorrichtung gemäß dem Oberbegriff des Anspruches 1.

Aus den Figuren 8a bis 8c der DE 195 15 302 A1, die alle Merkmale des Oberbegriffs des Anspruchs 1 zeigen, ist ein Drehmomentwandler bekannt, dessen Leitrad-Stütznabe axial schwimmend gelagert ist. Zur abtriebsseitigen Gehäusewandung ist die schwimmende Bewegung durch ein an der abtriebsseitigen Gehäusewandung anschlagendes Axiallager begrenzt.

Aus der DE 103 30 031 A1, die ebenfalls alle Merkmale des Oberbegriffs des Anspruchs 1 offenbart, ist ein Drehmomentwandler bekannt, dessen Leitrad-Stütznabe über ein Axialnadellager zur abtriebsseitigen Gehäusewandung gelagert ist.

Aus Figur 1 und Spalte 1, Zeile 55 bis 60 sowie Spalte 2, Zeile 20 bis 35 der US 5,680,758 A ist bekannt, bei einem Drehmomentwandler ein axiales Wälz- oder Gleitlager zwischen Leitrad-Stütznabe und abtriebsseitiger Gehäusewandung zu vermeiden. Die Leitrad-Stütznabe wird durch Fluiddruck in einem ersten Spalt zur abtriebsseitigen Gehäusewandung und durch Fluiddruck in einem gegenüberliegenden Spalt zur Abtriebsnabe der Überbrückungskupplung hin gelagert.

Aus Fig. 1 der GB 991 436 B ist ein Drehmomentwandler bekannt, dessen Leitrad-Stütznabe auf einem Radialstützelement axial fixiert ist. Ein Lager zwischen Leitrad-Stütznabe und abtriebsseitiger Gehäusewandung ist nicht vorhanden.

Der Erfindung liegt die Aufgabe zugrunde, eine Kopplungsvorrichtung mit einem Gehäuse und einer Stütznabe derart auszubilden, dass ohne funktionelle Nachteile auf eine Axiallagerung zwischen der Stütznabe und einer Abtriebswandung des Gehäuses verzichtet werden kann und toleranzbedingte Probleme im axialen Bewegungsbereich der Stütznabe wirksam vermieden sind.

Diese Aufgabe wird erfindungsgemäß durch die im Anspruch 1 angegebenen Merkmale gelöst.

Durch Vorgabe einer maximalen Distanz B für einen Spalt zwischen einem Anschlagelementenbauteil und einem Anschlagbauteil für eine erste Position - Einrück- oder Ausrückposition - des Anpreßmittels der Reibungskupplung wird für eine axial schwimmende Aufnahme der Stütznabe gegenüber dem Radialstützelement und damit nicht nur für eine exakt definierte axiale Relatiwerlagerbarkeit des der Stütznabe zugewiesenen Leitrades im Gehäuse der Kopplungsvorrichtung gesorgt, sondern darüber hinaus auch für eine exakt definierte axiale Relatiwerlagerbarkeit des einer Abtriebsnabe zugeordneten Turbinenrades, sofern sich dasselbe axial über das Leitrad am Gehäuse der Kopplungsvorrichtung, insbesondere hierbei an der abtriebsseitigen Gehäusewandung, abstützt.

Die Verwendung einer Axiallagerung zwischen der Stütznabe und der abtriebsseitigen Gehäusewandung wird dadurch entbehrlich.

Weitere Ansprüche sind auf vorteilhafte Weiterbildungen des Anschlagelementenbauteils sowie des Anschlagbauteils gerichtet, wobei jeweils ein Radialvorsprung am jeweiligen Aufnahmebauteil - also der Stütznabe oder dem Radialstützelement - vorgesehen ist. Mit besonders geringem Bauaufwand ist hierbei das Anschlagbauteil formschlüssig in eine Radialvertiefung des Radialstützelementes eingesetzt und/oder als Stützring ausgebildet, wobei diese Ausgestaltung insbesondere bei einem Radialstützelement in Form einer Stützwelle von Vorteil ist. Bei dem Anschlagelementenbauteil ist dagegen der Bauaufwand minimal, wenn er an der Stütznabe angeformt ist.

Im folgenden wird ein Ausführungsbeispiel der Erfindung anhand einer Zeichnung näher erläutert. Es zeigt:
- Fig. 1: die obere Hälfte eines Längsschnittes durch eine den Erfindungsgegenstand bildende Kopplungsvorrichtung;
- Fig. 2: eine vergrößerte Herauszeichnung des in Fig. 1 umkreisten Bereichs Y;
- Fig. 3: wie Fig. 2, aber mit anderer konstruktiver Ausführung;
- Fig. 4: wie Fig. 2, aber mit anderer konstruktiver Ausführung;
- Fig. 5: wie Fig. 2, aber mit anderer konstruktiver Ausführung.

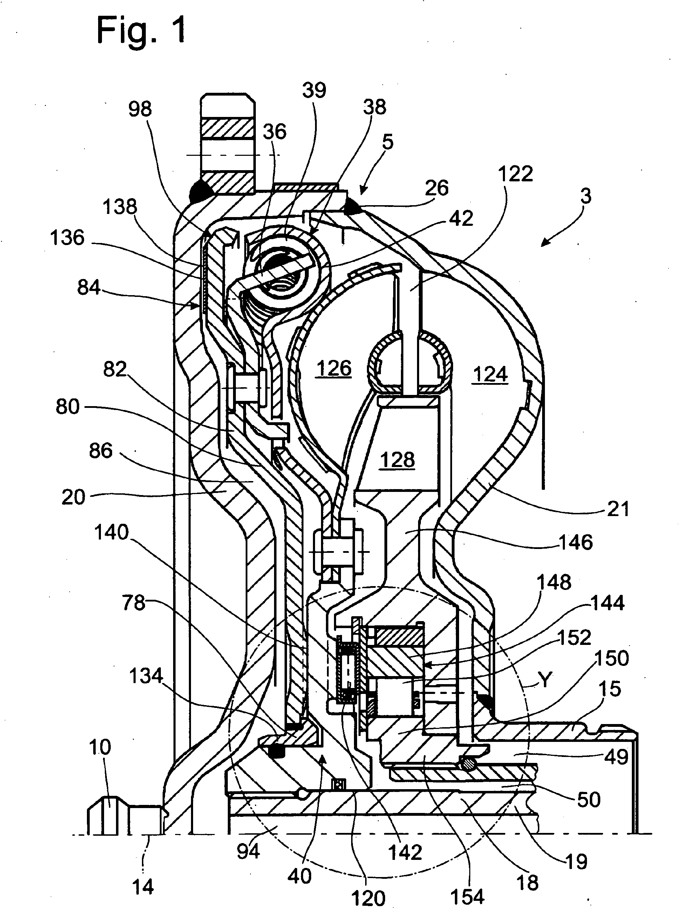

In Fig. 1 ist eine Kopplungsvorrichtung dargestellt.

Wie Fig. 1 zeigt, umfasst die Kopplungsvorrichtung 3 ein Gehäuse 5, das im Bereich einer Drehachse 14 einen Lagerzapfen 10 aufweist. An der vom Lagerzapfen 10 entfernt liegenden Axialseite weist das Gehäuse 5 eine Gehäusenabe 15 auf. Zu dieser konzentrisch angeordnet ist ein Abtrieb 18, der mit seinem freien Ende in das Gehäuse 5 ragt. Dieser Abtrieb 18 kann beispielsweise durch eine Getriebeeingangswelle 19 gebildet sein.

Das Gehäuse 5 weist eine sich vom Lagerzapfen 10 aus im Wesentlichen nach radial außen erstreckende antriebsseitige Gehäusewandung 20 und eine sich von der Gehäusenabe 15 aus im Wesentlichen nach radial außen erstreckende abtriebsseitige Gehäusewandung 21 auf. Diese beiden Gehäusewandungen 20, 21 sind im radial äußeren Bereich unmittelbar miteinander druckdicht verbunden, beispielsweise mittels einer Schweißnaht 26, um einen Verlust fluidförmigen Fördermediums aus einem von den Gehäusewandungen 20, 21 umschlossenen hydrodynamischen Kreis 122 zu verhindern. Dieser wird durch ein mit dem Gehäuse 5 drehfestes Pumpenrad 124, ein Turbinenrad 126 und ein Leitrad 128 gebildet.

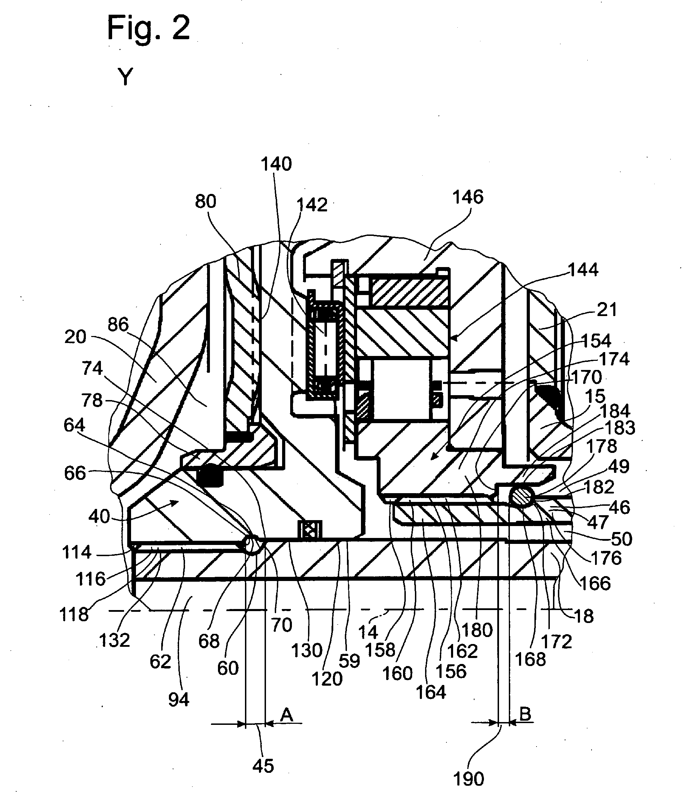

Das Turbinenrad 126 weist eine Abtriebsnabe 40 auf, die gemäß Fig. 2 mittels einer am Nabengrund 59 ausgebildeten Zentrierstützfläche 120 auf einem mit der Zentrierstützfläche 120 axial überlappenden ersten Abtriebsabschnitt 130 des Abtriebs 18 zentriert ist. Der erste Abtriebsabschnitt 130 ist gegenüber einem antriebsnäheren zweiten Abtriebsabschnitt 132 mit einer Querschnittsvergrößerung 60 ausgebildet und daher als Radialvorsprung 64 zur Realisierung eines am Abtrieb 18 vorgesehenen Anschlags 74 zu werten. Zur Gewährleistung der Funktion des Anschlags 74 weist der Radialvorsprung 64, bedingt durch die Querschnittsvergrößerung 60 eine Anlagefläche 70 auf, die mit einer Anlagefläche 68 an der Abtriebsnabe 40 in Wirkverbindung gebracht werden kann. Die Anlagefläche 68 der Abtriebsnabe 40 ist an der Verzahnung 114 vorgesehen, die sich, ausgehend vom Nabengrund 59, nach radial innen in Richtung zum zweiten Abtriebsabschnitt 132 erstreckt und dort in eine am letztgenannten vorgesehene Gegenverzahnung 116 zur Bildung einer Drehverbindung 118 drehfest, aber axial relativ verlagerbar gegenüber dem Abtrieb 18, eingreift. Die Verzahnung 114 wirkt demnach als ein in Richtung des Abtriebs 18 weisender Radialvorsprung 62 und damit als Anschlagelement 66 der Abtriebsnabe 40.

Die Abtriebsnabe 40 nimmt an einer radial außen liegenden Aufnahmefläche eine Anpreßmittel-Nabe 78 für ein Anpreßmittel 80 relativ drehbar auf, wobei das Anpreßmittel 80, wie Fig. 1 zeigt, Teil einer Reibungskupplung 98 in Form einer Überbrückungskupplung 84 ist. Das Anpreßmittel 78 kann als Kolben 82 realisiert sein, die Anpreßmittel-Nabe 78 als Kolbenfuß 134. Axial zwischen dem Anpreßmittel 80, das im radial äußeren Bereich an seiner der antriebsseitigen Gehäusewandung 20 zugewandten Axialseite einen Reibbelag 136 trägt, und der antriebsseitigen Gehäusewandung 20 ist ein Druckraum 86 vorgesehen, der über eine Mittenbohrung 94 im Antrieb 18 mit viskosem Fördermedium versorgbar ist.

An der von der antriebsseitigen Gehäusewandung 20 abgewandten Axialseite des Anpreßmittels 80 ist ein Eingangsteil 36 eines Torsionsschwingungsdämpfers 38 befestigt, der über Energiespeicher 39 mit einem Ausgangsteil 42 des Torsionsschwingungsdämpfers 38 verbunden ist. Der Ausgangsteil 42 wiederum ist an der Abtriebsnabe 40 und damit am Turbinenrad 126 befestigt.

In Einrückposition steht des Anpreßmittel 80 über seinen Reibbelag 136 in Anlage an der antriebsseitigen Gehäusewandung 20, die somit als Kupplungselement 138 wirksam ist. Ein vom Gehäuse 5 auf das Anpreßmittel 80 übertragenes Drehmoment wird über den Torsionsschwingungsdämpfer 38 auf die Abtriebsnabe 40 und von dieser über die Drehverbindung 118 auf den Abtrieb 18 übertragen. Hierbei ist die Abtriebsnabe 40 in Achsrichtung frei von einer in Richtung zur abtriebsseitigen Gehäusewandung 20 wirkenden Axialkraft, so dass gemäß Fig. 2 zwischen der ersten Anlagefläche 68 an der Abtriebsnabe 40 und der zweiten Anlagefläche 70 am Abtrieb 18 ein eine Distanz A erzeugender Spalt 45 vorliegt.

In Ausrückposition steht das Anpreßmittel 80 in einer Position, in welcher es über eine Anlagefläche 140 eine zur abtriebsseitigen Gehäusewandung 21 gerichtete Axialkraft auf das Turbinenrad 126 ausübt, wobei diese Axialkraft über eine Axiallagerung 142 auf den eine Leitradnabe 146 (Fig. 1) des Leitrades 128 aufnehmenden Freilauf 144 geleitet wird, der aus einem radial äußeren Freilaufring 148, einem radial inneren Freilaufring 150 und radial zwischen den beiden Freilaufringen 148, 150 angeordnete Klemmkörper 152 besteht. Der radial innere Freilaufring 150 dient als Stütznabe 154 des Leitrades 128 und ist auf der als Radialstützelement 46 wirksamen, gehäusefesten Stützwelle 47 angeordnet, die radial zwischen sich und der Gehäusenabe 15 jeweils einen ringförmigen Kanal 49, 50 für viskoses Fördermedium aufweist, und zur Aufnahme der vom Anpreßmittel 80 eingeleiteten Axialkraft dient. Hierzu sind Stütznabe 154 und Stützwelle 47 folgendermaßen ausgebildet:

Ausgehend von einem Nabengrund 156 (Fig. 2) der Stütznabe 154 erstreckt sich eine Verzahnung 158 in Richtung zu einem ersten Stützwellenabschnitt 164 der Stützwelle 47, an welchem eine Gegenverzahnung 160 ausgebildet ist, die zusammen mit der Verzahnung 158 eine drehfeste, aber eine axiale Relativbewegbarkeit der Stütznabe 154 gegenüber der Stützwelle 47 ermöglichende Drehverbindung 162 bilden. An ihrer der abtriebsseitigen Gehäusewandung 21 zugewandten Axialseite verfügt die Stütznabe 154 über eine erste axiale Anlagefläche 170 für einen Stützring 178, der an der Stützwelle 47 eine zweite axiale Anlagefläche 172 vorfindet, und zwar im Bereich einer Querschnittsvergrößerung 168, die den ersten Stützwellenabschnitt 164 in einen zweiten Stützwellenabschnitt 166 überführt. Damit wird der die Verzahnung 158 tragende Axialabschnitt der Stütznabe 154 zu einem ersten Radialvorsprung 180 eines Anschlagelementenbauteils 174, die Querschnittsvergrößerung 168 an der Stützwelle 47 dagegen zu einem zweiten Radialvorsprung 182 eines Anschlagbauteils 176.

Axial zwischen dem ersten Radialvorsprung 180 des Anschlagelementenbauteils 174 und dem zweiten Radialvorsprung 182 des Anschlagbauteils 176 ergibt sich eine Distanz B für einen Spalt 190, wenn das Anpreßmittel 80 keine Axialkraft in Richtung zur abtriebsseitigen Gehäusewandung 21 ausübt, beispielsweise, wenn sich das Anpreßmittel 80 in seiner Einrückposition befindet. Übt das Anpreßmittel 80 dagegen diese Axialkraft aus, beispielsweise in seiner Ausrückposition, dann wird der Spalt 190 infolge fortgesetzter Annäherung des Leitrades 128 an die abtriebsseitige Gehäusewandung 21 so lange reduziert, bis das Anschlagelementenbauteil 174 über den Stützring 178 an dem Anschlagbauteil 176 in Anlage gekommen und der Spalt 190 restlos aufgebraucht ist. Aufgrund der gehäusefesten Anordnung der Stützwelle 47 im Gehäuse 5 ist danach das Leitrad 128 axial positioniert.

Die Stütznabe 154 verfügt an ihrer dem Stützring 178 zugewandten Axialseite über eine Axialerstreckung 184, die mit ihrer als Radialstützfläche 183 dienenden radialen Innenseite die Stütznabe 154 über den Stützring 178 an der Stützwelle 47 radial abstützt und dadurch eine zusätzliche Sicherheit gegen Kippbewegungen der Stütznabe 154 und damit des Leitrades 128 gegenüber der Drehachse 14 der Kopplungsvorrichtung 3 bildet.

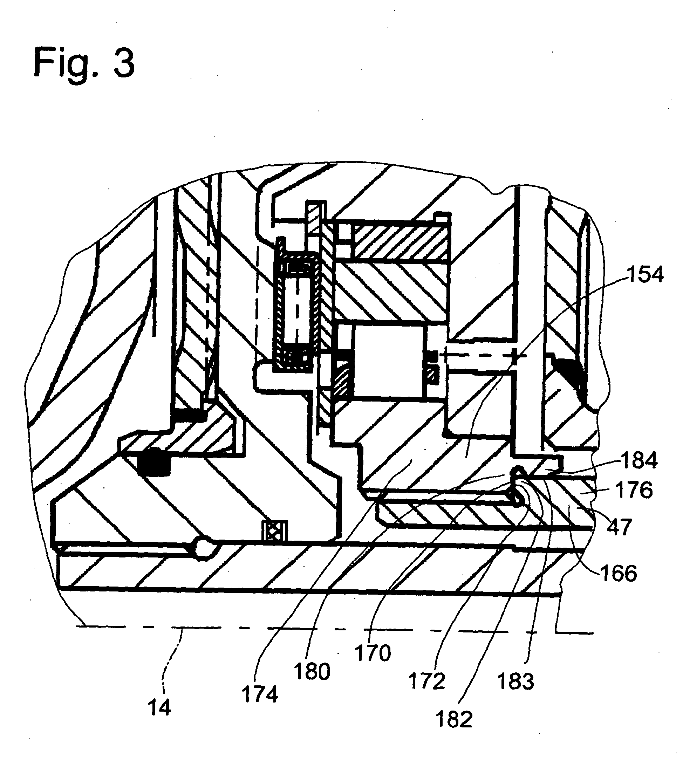

Die weiteren Figuren 3 bis 5 behandeln andere Ausführungen der Stütznabe 154 und sind bezüglich der Bezugsziffer sowie der Beschreibung auf die Unterschiede gegenüber der Ausführung gemäß Fig. 2 beschränkt.

In Fig. 3 entspricht die Stütznabe 154 konstruktiv und funktional derjenigen gemäß Fig. 2, stützt sich aber mit der Radialstützfläche 183 ihrer Axialerstreckung 184 unmittelbar an der radialen Außenseite des zweiten Stützwellenabschnittes 166 der Stützwelle 47 ab. Der unmittelbare Kontakt zwischen Axialerstreckung 184 und Stützwellenabschnitt 166 ist auch bei Ausbildung beider Bauteile aus Stahl aufgrund fehlender Relativdrehbarkeit unkritisch.

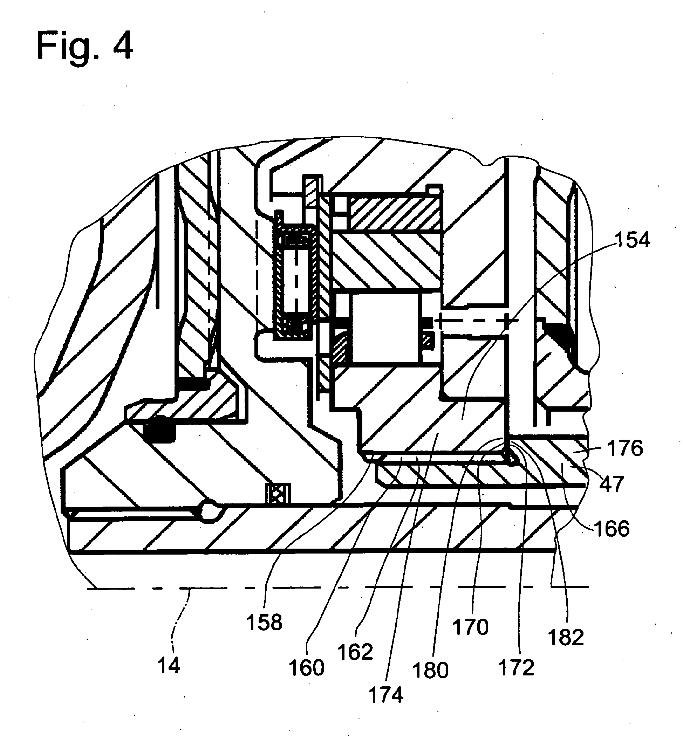

Gemäß Fig. 4 kann die Stütznabe 154 auch ohne Axialerstreckung ausgebildet sein. Im Gegensatz zu den anderen Ausführungen erfolgt hier die Zentrierung der Stütznabe 154 auf der Stützwelle 47 allein mittels der Drehverbindung 162, indem die Verzahnung 158 der Stütznabe 154 mit der Gegenverzahnung 160 der Stützwelle 47 über die jeweiligen Kopf- bzw. Fußkreisdiirchmesser in Zentrierverbindung steht.

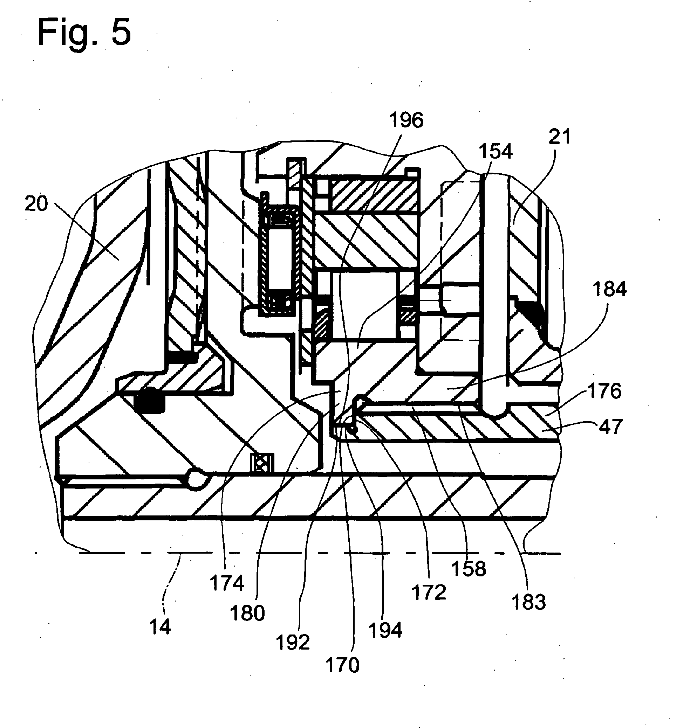

In Fig. 5 übernimmt die Axialerstreckung 184 mit ihrer Radialstützfläche 183 an der der abtriebsseitigen Gehäusewandung 21 zugewandten Axialseite der Stütznabe 154 die Verzahnung 158 auf einer axialen Teilerstreckung der letztgenannten. Die Funktion des Anschlagelementenbauteils 174 wird von einem an der Stütznabe 154 an deren der antriebsseitigen Gehäusewandung 20 zugewandten Axialseite vorgesehenen Radialvorsprung 180 erfüllt, der an seiner der abtriebsseitigen Gehäusewandung 21 zugewandten Axialseite über eine erste Anlagefläche 170 verfügt, die mit einer an der Stützwelle 47 vorgesehenen zweiten Anlagefläche 172 in Anlage bringbar ist. Die zweite Anlagefläche 172 entsteht aufgrund einer Radialvertiefung 192 in der Stützwelle 47, wobei die letztgenannte aufgrund der zweiten Anlagefläche 172 zum Anschlagbauteil 176 wird. Da die Stütznabe 154 mit ihrem Radialvorsprung 180 nicht nur radial in die Radialvertiefung 192 eindringt, sondern darüber hinaus mit einem auf einen Vertiefungsgrund 194 der Stützwelle 47 zugewandten freien Ende 196 auf dem Vertiefungsgrund 194 in Anlage kommt, wird auch eine Zentrierung der Stütznabe 154 gegenüber der Stützwelle 47 sowie eine Stabilisierung der Stütznabe 154 gegen Kippbewegungen bewirkt.

## Patentansprüche

1. Kopplungsvorrichtung, aufweisend ein mit einem Antrieb ausgebildetes Gehäuse (5), einen Abtrieb (18), der gegenüber dem Gehäuse (5) in Achsrichtung der Drehachse (14) des Gehäuses (5) positioniert, aber in Umfangsrichtung drehbar ist, und zumindest eine in dem Gehäuse (5) aufgenommene, zwischen einer Einrückposition und einer Ausrückposition schaltbare Reibungskupplung (98), über die in der Einrückposition ein Drehmoment des Antriebs über das Gehäuse (5) auf den Abtrieb (18) übertragbar ist, während in der Ausrückposition diese Drehmomentübertragung zumindest teilweise aufgehoben ist, und mit einem im Gehäuse (5) vorgesehenen, durch zumindest ein Pumpenrad (124), ein Turbinenrad (126) und ein Leitrad (128) gebildeten hydrodynamischen Kreis (122), wobei das Leitrad (128) mit einer Stütznabe (154) auf einem gehäusefest angeordneten Radialstützelement (46) angeordnet ist, und die Stütznabe (154) eine von der Reibungskupplung (98) fortweisende Axialerstreckung (184) aufweist,
**dadurch gekennzeichnet,**
**dass** die Axialerstreckung (184) der Stütznabe (154) zumindest in den radialen Erstreckungsbereich des Radialstützelementes (46) eingreift und als Anschlagelementenbauteil (174) dient, das in einer ersten Position - Einrück- oder Ausrückposition - der Reibungskupplung (98) maximal um eine durch einen Spalt (190) bewirkte Distanz (B) von einem Anschlagbauteil (176) des Radialstützelementes (46) entfernt ist, und beim Übergang in eine zweite Position von Einrück- und Ausrückposition unter der Wirkung des Anpressmittels (80) bei zumindest teilweisem Abbau der Distanz (B) zumindest eine Annäherung an das Anschlagbauteil (176) erfährt.

2. Kopplungsvorrichtung nach Anspruch 1,
**dadurch gekennzeichnet,**
**dass** das Anschlagelementenbauteil (174) durch einen die Stütznäbe (154) an deren dem Radialstützelement (46) zugewandten Seite überstehenden ersten Radialvorsprung (180) gebildet ist, der zumindest mit einem radial abtriebsseitigen freien Ende in den radialen Erstreckungsbereich des Anschlagbauteils (176) eingreift und mit einer dem letztgenannten zugewandten Axialseite über eine erste Anlagefläche (170) für einen Kontakt mit einer am Anschlagbauteil (176) vorgesehenen zweiten Anlagefläche (172) verfügt.

3. Kopplungsvorrichtung nach Anspruch 1 oder 2 ,
**dadurch gekennzeichnet,**
**dass** das Anschlagbauteil (176) durch einen am Radialstützelement (46) an dessen einer antriebsseitigen Gehäusewandung (20) zugewandten Axialseite ausgebildeten zweiten Radialvorsprung (182) gebildet ist, der mit einer der ersten Anlagefläche (170) des Anschlagelementenbauteils (174) zugewandten zweiten Anlagefläche (172) mit der ersten Anlagefläche (170) des Anschlagelementenbauteils (174) in Eingriff bringbar ist.

4. Kopplungsvorrichtung nach Anspruch 1, 2 oder 3,
**dadurch gekennzeichnet,**
**dass** das Anschlagelementenbauteil (174) einstückig mit der Stütznabe (154) ausgebildet ist.

5. Kopplungsvorrichtung nach nach einem der Ansprüche 1 bis 4,
**dadurch gekennzeichnet,**
**dass** das Anschlagelementenbauteil (174) und das Anschlagbauteil (176) jeweils als Verzahnung (158) für eine Zwangsfixierung zwischen der Stütznabe (154) und dem Radialstützelement (46) in Umfangsrichtung sowie für eine Relativbewegung von Stütznabe (154) und Radialstützelement (46) in Achsrichtung ausgebildet ist.

6. Kopplungsvorrichtung nach einem der Ansprüche 1 bis 5,
**dadurch gekennzeichnet,**
**dass** die Axialerstreckung (184) der Stütznabe (154) an ihrer radialen Innenseite eine Radialstützfläche (183) aufweist, durch welche sie am Radialstützelement (46) eine Abstützung erhält.

7. Kopplungsvorrichtung nach Anspruch 6,
**dadurch gekennzeichnet,**
**dass** am Radialstützelement (46) der zweite Radialvorsprung (182) zur Aufnahme der Radialstützfläche (183) an der Axialerstreckung (184) der Stütznabe (154) vorgesehen ist.

8. Kopplungsvorrichtung nach Anspruch 7,
**dadurch gekennzeichnet,**
**dass** der zweite Radialvorsprung (182) des Radialstützelementes (46) durch einen die Radialstützfläche (183) radial untergreifenden Stützring (178) gebildet ist.

9. Kopplungsvorrichtung nach Anspruch 8,
**dadurch gekennzeichnet,**
**dass** der Stützring (178) auf einem ersten Stützwelleriabschnitt (164) des Radialstützelementes (46) mit gegenüber einem zweiten Stützwellenabschnitt (166) des Radialstützelementes (46) reduziertem Querschnitt aufgenommen ist, und mit seinem der Radialstützfläche (183) zugewandten radial freien Ende über die radiale Außenseite zumindest des ersten Stützwellenabschnittes (164) hinausgreift.

## Claims

1. Coupling apparatus, having a housing (5) which is configured with a drive, an output means (18) which is positioned opposite the housing (5) in the axial direction of the rotational axis (14) of the housing (5) but can be rotated in the circumferential direction, and at least one friction clutch (98) which is received in the housing (5), can be switched between an engagement position and a disengagement position and via which, in the engagement position, a torque of the drive can be transmitted to the output means (18) via the housing (5) while, in the disengagement position, this torque transmission is cancelled at least partially, and having a hydrodynamic circuit (122) which is provided in the housing (5) and is formed by at least one impeller (124), one turbine wheel (126) and one stator (128), the stator (128) being arranged with a supporting hub (154) on a radial supporting element (46) which is arranged such that is fixed to the housing, and the supporting hub (154) having an axial extent (184) which points away from the friction clutch (98), **characterized in that** the axial extent (184) of the supporting hub (154) engages at least into the radial extent region of the radial supporting element (46) and serves as stop-element component (174) which, in a first position (engagement or disengagement position) of the friction clutch (98), is spaced apart from a stop component (176) of the radial supporting element (46) at most by a distance (B) which is brought about by a gap (190) and, during the transition into a second position from the engagement and disengagement position, is subjected to at least an approach towards the stop component (176) under the action of the pressure means (80) with an at least partial reduction of the distance (B).

2. Coupling apparatus according to Claim 1, **characterized in that** the stop-element component (174) is formed by a first radial projection (180) which protrudes beyond the supporting hub (154), on its side which faces the radial supporting element (46), engages at least with a radially output-side free end into the radial extent region of the stop component (176) and, by way of an axial side which faces the former, has a first bearing face (170) for contact with a second bearing face (172) which is provided on the stop component (176).

3. Coupling apparatus according to Claim 1 or 2, **characterized in that** the stop component (176) is formed by a second radial projection (182) which is formed on the radial supporting element (46), on its axial side which faces a drive-side housing wall (20), and can be brought into engagement with the first bearing face (170) of the stop-element component (174) by way of a second bearing face (172) which faces the first bearing face (170) of the stop-element component (174).

4. Coupling apparatus according to Claim 1, 2 or 3, **characterized in that** the stop-element component (174) is configured integrally with the supporting hub (154).

5. Coupling apparatus according to one of Claims 1 to 4, **characterized in that** the stop-element component (174) and the stop component (176) are configured in each case as a toothing system (158) for positive fixing between the supporting hub (154) and the radial supporting element (46) in the circumferential direction and for a relative movement of the supporting hub (154) and the radial supporting element (46) in the axial direction.

6. Coupling apparatus according to one of Claims 1 to 5, **characterized in that** the axial extent (184) of the supporting hub (154) has a radial supporting face (183) on its radial inner side, by way of which radial supporting face (183) it is supported on the radial supporting element (46).

7. Coupling apparatus according to Claim 6, **characterized in that** the second radial projection (182) is provided on the radial supporting element (46) for receiving the radial supporting face (183) on the axial extent (184) of the supporting hub (154).

8. Coupling apparatus according to Claim 7, **characterized in that** the second radial projection (182) of the radial supporting element (46) is formed by a supporting ring (178) which reaches radially around the radial supporting face (183).

9. Coupling apparatus according to Claim 8, **characterized in that** the supporting ring (178) is received on a first supporting-shaft section (164) of the radial supporting element (46) with a reduced cross section in comparison with a second supporting-shaft section (166) of the radial supporting element (46), and reaches beyond the radial outer side at least of the first supporting-shaft section (164) by way of its radially free end which faces the radial supporting face (183).

## Revendications

1. Dispositif d'accouplement, présentant un boîtier (5) réalisé avec un entraînement, une sortie d'entraînement (18), qui est positionnée par rapport au boîtier (5) dans la direction axiale de l'axe de rotation (14) du boîtier (5), mais qui peut tourner dans la direction périphérique, et au moins un embrayage à friction (98) reçu dans le boîtier (5), pouvant être commuté d'une position embrayée dans une position débrayée, par le biais duquel, dans la position embrayée, un couple de l'entraînement peut être transmis par le biais du boîtier (5) à la sortie d'entraînement (18), tandis que dans la position débrayée, ce transfert de couple est au moins partiellement supprimé, et comprenant un circuit hydrodynamique (122) prévu dans le boîtier (5), formé par au moins une roue de pompe (124), une roue de turbine (126) et une roue directrice (128), la roue directrice (128) étant disposée avec un moyeu de support (154) sur un élément de support radial (46) disposé de manière fixée au boîtier, et le moyeu de support (154) présentant une étendue axiale (184) dans le prolongement de l'embrayage à friction (98),
**caractérisé en ce que**
l'étendue axiale (184) du moyeu de support (154) vient en prise au moins dans la région d'étendue radiale de l'élément de support radial (46) et sert de composant d'élément de butée (174) qui, dans une première position - embrayée ou débrayée - de l'embrayage à friction (98) est écarté au maximum d'une distance (B), constituée par une fente (190), d'un composant de butée (176) de l'élément de support radial (46), et lors de la transition à une deuxième position, de la position embrayée et débrayée, est au moins rapproché du composant de butée (176) sous l'effet du moyen de pression (80) avec une réduction au moins partielle de la distance (B).

2. Dispositif d'accouplement selon la revendication 1, **caractérisé en ce que**
le composant d'élément de butée (174) est formé par une première saillie radiale (180) dépassant du moyeu de support (154) au niveau de son côté tourné vers l'élément de support radial (46), laquelle vient en prise au moins avec une extrémité libre radialement du côté de la sortie d'entraînement dans la région d'étendue radiale du composant de butée (176) et, avec un côté axial tourné vers ce dernier, dispose d'une première surface d'appui (170) pour un contact avec une deuxième surface d'appui (172) prévue sur le composant de butée (176).

3. Dispositif d'accouplement selon la revendication 1 ou 2,
**caractérisé en ce que**
le composant de butée (176) est formé par une deuxième saillie radiale (182) réalisée sur l'élément de support radial (46) au niveau de son côté axial tourné vers une paroi du boîtier (20) du côté de l'entraînement, laquelle peut être amenée en prise par une deuxième surface d'appui (172) tournée vers la première surface d'appui (170) du composant d'élément de butée (174) avec la première surface d'appui (170) du composant d'élément de butée (174).

4. Dispositif d'accouplement selon la revendication 1, 2 ou 3,
**caractérisé en ce que**
le composant d'élément de butée (174) est réalisé d'une seule pièce avec le moyeu de support (154).

5. Dispositif d'accouplement selon l'une quelconque des revendications 1 à 4,
**caractérisé en ce que**
le composant d'élément de butée (174) et le composant de butée (176) sont chacun réalisés sous forme de denture (158) pour une fixation forcée entre le moyeu de support (154) et l'élément de support radial (46) dans la direction périphérique ainsi que pour un mouvement relatif du moyeu de support (154) et de l'élément de support radial (46) dans la direction axiale.

6. Dispositif d'accouplement selon l'une quelconque des revendications 1 à 5,
**caractérisé en ce que**
l'étendue axiale (184) du moyeu de support (154) présente sur son côté radialement interne une surface de support radiale (183), par laquelle elle acquiert un support au niveau de l'élément de support radial (46).

7. Dispositif d'accouplement selon la revendication 6,
**caractérisé en ce que**
sur l'élément de support radial (46), la deuxième saillie radiale (182) est prévue pour recevoir la surface de support radiale (183) au niveau de l'étendue axiale (184) du moyeu de support (154).

8. Dispositif d'accouplement selon la revendication 7,
**caractérisé en ce que**
la deuxième saillie radiale (182) de l'élément de support radial (46) est formée par un anneau de support (178) venant en prise radialement par le dessous avec la surface de support radiale (183).

9. Dispositif d'accouplement selon la revendication 8,
**caractérisé en ce que**
l'anneau de support (178) est reçu sur une première portion d'arbre de support (164) de l'élément de support radial (46) avec une section transversale réduite par rapport à une deuxième portion d'arbre de support (166) de l'élément de support radial (46), et avec son extrémité libre radialement, tournée vers la surface de support radiale (183), vient en prise au-delà du côté radial extérieur d'au moins la première portion d'arbre de support (164).
